# EUROPÄISCHE PATENTSCHRIFT

(11) **EP 1 762 423 B1**
(45) Veröffentlichungstag und Bekanntmachung des Hinweises auf die Patenterteilung: **29.10.2008**
(21) Anmeldenummer: 06016990.1
(22) Anmeldetag: 16.08.2006
(51) Int. Cl.: B60N 2/015

(54) **Kraftfahrzeug mit einem Sitz**
Motor vehicle with a seat
Véhicule automobile avec un siège

(30) Priorität: 12.09.2005 DE 102005043552
(43) Veröffentlichungstag der Anmeldung: 14.03.2007
(60) Teilanmeldung: 08005092.5
(73) Patentinhaber: GM Global Technology Operations, Inc., Detroit, MI 48265-3000 (US)
(72) Erfinder: Böer, Thomas, 65462 Ginsheim-Gustavsburg (DE); Larsen, Danny-Brian, Holland, MI 49424 (US); Skibinski, Valter, 55578 Wallertheim (DE)
(74) Vertreter: Strauss, Peter

(56) Entgegenhaltungen:
- DE-U1- 29 518 937
- NL-C2- 1 012 287
- US-A- 5 368 355

## Beschreibung

Die Erfindung betrifft ein Kraftfahrzeug mit einem Sitz, insbesondere einen Personenkraftwagen mit einem Vordersitz, wobei der Sitz in einer Schiene gelagert ist und einen Sitzkissen-Rahmen zur Aufnahme eines Sitzkissens und einen Rückenlehnen-Rahmen zur Aufnahme einer Rückenlehne aufweist, sowie der Rückenlehnen-Rahmen im Sitzkissen-Rahmen gelagert ist, sowie der Sitz einen durch mindestens eine Tragstütze gebildeten Fuß aufweist, der einerseits mit dem Sitzkissen-Rahmen verbunden ist und andererseits in der unterhalb des Bodens des Fahrzeug-Innenraums angeordneten Schiene gelagert ist, sowie die Lagerung des Sitzes nur über den Fuß erfolgt.

Ein Kraftfahrzeug mit einem derartigen Sitz ist aus der NL-C2-1 012 287 bekannt.

Bei Personenkraftwagen finden ferner Sitze Verwendung, die in Sitzschienen verfahrbar gelagert sind. Bei ebenem Boden des Fahrzeug-Innenraums sind nicht nur die vorderen Sitze des Personenkraftwagens, sondern auch die Sitze der hinteren Sitzreihe bzw. der hinteren Sitzreihen verfahrbar. Der jeweilige Sitz ist in zwei in Längsrichtung des Fahrzeugs orientierten, parallel zueinander angeordneten Schienen verfahrbar gelagert, wobei der Abstand der Schienen im Wesentlichen der Breite des Sitzes entspricht. Das Verfahren des Sitzes erfolgt manuell oder elektromotorisch.

Durch die Lagerung des jeweiligen Sitzes in zwei Sitzschienen ist der Raum unter dem Sitzkissen weitgehend unzugänglich und dient allenfalls als Aufnahmeraum für die Füße eines Fondinsassen. Abgesehen hiervon zeichnet sich ein derart gelagerter Sitz im Bereich seiner Lagerung durch eine recht voluminöse Gestaltung aus, die den optischen Gesamteindruck nicht vorteilhaft prägt. Im Übrigen ist der konstruktive Aufwand im Zusammenhang mit der Lagerung des Sitzes in zwei separaten, beabstandet angeordneten Sitzschienen recht groß. Dies gilt sowohl für den Boden des Fahrzeug-Innenraums, mit dem die beiden Schienen zu befestigen sind, als auch für die Gestaltung des Sitzkissen-Rahmens, der mit den diversen Schlitten auszustatten ist, die mit den Führungsschienen zusammenwirken.

In der US-A-5 368 355 ist ein Van beschrieben, bei dem die jeweilige, mindestens drei Sitze aufweisende Sitzreihe über zwei Füße in unterhalb des Bodens des Fahrzeugs angeordneten Schienen verfahrbar ist.

Aufgabe der vorliegenden Erfindung ist es, bei einem Kraftfahrzeug der eingangs genannten Art eine besondere Lagerung und Funktionalität des Sitzes im Fahrzeug und einen besonders gestalteten Sitz anzugeben.

Gelöst wird die Aufgabe bei einem Kraftfahrzeug der eingangs genannten Art dadurch, dass eine Vertiefung die Schiene aufnimmt, der Fuß mit einer Verkleidung versehen ist und Mittel zum Abdecken der Vertiefung in demjenigen Bereich, der vom Fuß nicht eingenommen wird, vorgesehen sind.

Erfindungsgemäß ist somit nur eine Schiene zur Lagerung des Sitzes vorgesehen. Diese kann durchaus aus insbesondere zwei Schienen bestehen, die in einem gewissen, auf die Sitzbreite bezogen, relativ geringem Abstand angeordnet sind, und damit geeignet sind, in den Sitz eingeleitete seitliche Kräfte und damit seitliche Kippmomente sicher aufzunehmen. Der Sitz ist über den Fuß in der Schiene gelagert. Unter Fuß ist ein Bauteil oder eine Baueinheit zu verstehen, die über die Schiene zentral die Lagerkraft in den Sitzkissen-Rahmen einleitet. Der Fuß selbst kann hierbei durchaus durch mehrere Bauteile gebildet sein, um eine stabile Lagerung des Sitzes in der Schiene zu gewährleisten. Es ist insbesondere an einen durch zwei Tragstützen gebildeten Fuß gedacht. Diese beiden Tragstützen sind in einem gewissen Abstand und im Wesentlichen parallel zueinander angeordnet. Erfindungsgemäß erfolgt die Einleitung der Lagerkraft vom Sitz in die Schiene nicht dezentral, wie bei Sitzen, die in zwei parallelen Schienen geführt sind, sondern weitgehend zentral. Bei Verwendung von zwei Tragstützen sind diese, bezogen auf die Verschieberichtung des Sitzes, die durch die eine Schiene vorgegeben ist, hintereinander angeordnet. Durch diese Anordnung hintereinander können beim Beschleunigen und Abbremsen des Fahrzeuges optimal Kippmomente, die von dem den Sitz Benutzenden in den Sitz eingeleitet werden, von der Schiene abgefangen werden. Es ist aber gleichfalls denkbar, die Tragstütze nicht hintereinander, sondern nebeneinander, somit in Querrichtung des Sitzes anzuordnen.

Demzufolge ist der Sitzkissen-Rahmen insbesondere mittig im Fuß gelagert.

Bevorzugt ist der Sitz in der Schiene verfahrbar gelagert und es ist der Rückenlehnen-Rahmen schwenkbar im Sitzkissen-Rahmen gelagert.

Gemäß der Erfindung ist der Fuß mit einer Verkleidung versehen. Als besonders vorteilhaft wird es angesehen, wenn der Fuß und der untere Bereich des Sitzkissens mit einer gemeinsamen Verkleidung versehen sind. Diese Verkleidung ist insbesondere mit dem Sitzkissen-Rahmen verbunden und besteht aus Carbon. Die Verkleidung weist zweckmäßig im oberen Bereich einen bereichsweise umlaufenden Flansch zur Befestigung des Sitzkissens auf. Die Carbon-Verkleidung dient der zusätzlichen Versteifung des Sitzkissen-Rahmens. Im unteren Bereich der Verkleidung ist zweckmäßig eine Blende, insbesondere eine Blende aus Aluminium, vorgesehen, die als Design-Element und als Abschluss der Verkleidung dient.

Auch die Rückenlehne ist vorzugsweise an deren Rückseite mit einer Verkleidung versehen. Auch diese Verkleidung besteht vorzugsweise aus Carbon. In diese Verkleidung ist vorzugsweise ein Haltegriff für Fondinsassen mit integriert. Die Verkleidung, insbesondere Carbon-Verkleidung, trägt zur Steifigkeit und der Reduzierung des Gewichts bei.

Unter dem Aspekt der Lagerung des Sitzes über dessen Fuß kommt der Anordnung der Schiene besondere Bedeutung zu, die unterhalb des Bodens des Fahrzeug-Innenraums angeordnet ist. Hierdurch ist sicher gestellt, dass die Bodenfläche des Fahrzeug-Innenraums durchgängig als ebene Fläche darstellbar ist, weil keine Schienen zur Lagerung der Sitze oberhalb der Bodenfläche montiert sind. Bei aus dem Fahrzeug entfernten Sitzen, insbesondere Vordersitzen, ergibt sich somit ein ebener Laderaum.

Gemäß einer bevorzugten Weiterbildung der Erfindung ist vorgesehen, dass der Boden des Fahrzeug-Innenraums U-förmig vertieft ausgebildet, insbesondere U-förmig verprägt ist, wobei die Vertiefung die Schiene und einen Verstellmechanismus für den Sitz aufnimmt.

Gemäß der Erfindung sind ferner Mittel zum Abdecken der Vertiefung in denjenigen Bereich, der vom Fuß nicht eingenommen wird, vorgesehen. Diese Mittel sind insbesondere verschiebbar. Hierdurch ist sicher gestellt, dass, bezogen auf die Längserstreckung der Schiene, vor und hinter dem Fuß die Vertiefung im Boden des Fahrzeug-Innenraums abgedeckt ist. Dies ist einerseits unter optischem Aspekt vorteilhaft, andererseits wird durch die Abdeckung der Vertiefung verhindert, dass Schmutz oder dergleichen dorthin gelangt und somit die Funktionsfähigkeit der Schiene und der weiteren in der Vertiefung angeordneten Komponenten nachteilig beeinflusst.

Die Mittel zum Abdecken der Vertiefung sind insbesondere als Rollos ausgebildet, die in Verschieberichtung des Sitzes vor und hinter diesem angeordnet sind. Die Mittel zum Abdecken der Vertiefung sind insbesondere in Lagerschienen gelagert, die innerhalb der Vertiefung angeordnet sind.

Der Sitz ist insbesondere mittels eines elektrischen Spindelantriebs verfahrbar. Die Verstellung der Neigung der Rückenlehne erfolgt vorzugsweise mittels eines elektrischen Antriebes.

Gemäß einer besonderen Ausführungsform der Erfindung ist vorgesehen, dass der Sitzkissen-Rahmen Rohrabschnitte aufweist, somit im Wesentlichen als Rohrrahmen ausgebildet ist. Der Sitzkissen-Rahmen weist insbesondere ein umlaufendes Rohr zur Aufnahme des Sitzkissens, am Rohr angebrachte Verstrebungen und eine diese aufnehmende bodenparallele Anschlussplatte auf. Vorzugsweise ist an der Anschlussplatte die mindestens eine Tragstütze lösbar befestigt und es ist mindestens eine Tragstütze mit einem Schlitten der Führungsschiene verbunden, insbesondere lösbar verbunden.

Auch der Rückenlehne-Rahmen weist vorzugsweise Rohrabschnitte auf. Er ist damit gleichfalls im Wesentlichen als Rohrrahmen ausgebildet.

Vorteilhafte Ausführungsformen des erfindungsgemäßen Fahrzeuges mit zweckmäßigen Weiterbildungen und Ausgestaltungen der Erfindung sind in den weiteren Patentansprüchen angegeben.

Die Erfindung wird anhand eines in der Zeichnung dargestellten Ausführungsbeispiels im Folgenden näher beschrieben. Es zeigt:
- Figur 1: eine Seitenansicht in den Innenraum des Personenkraftwagens mit dem im Vordergrund befindlichen Beifahrersitz,
- Figur 2: zur Verdeutlichung der grundsätzlichen Struktur von Sitz und dessen Lagerung im Fahrzeugboden, eine räumliche Anordnung des Sitzes, dargestellt ohne Sitzkissen und Rückenlehne (Rückenlehnen-Kissen), und des im zugeordneten Abschnitt des Bodens des Fahrzeugs gelagerten Fußes des Sitzes,
- Figur 3: eine Seitenansicht der Verkleidung von Sitzkissen-Rahmen und Fuß,
- Figur 4: eine räumliche Ansicht der in Figur 3 gezeigten Verkleidung,
- Figur 5: eine Seitenansicht der in Figur 2 gezeigten Anordnung,
- Figur 6: eine Detailansicht des Sitzkissen-Rahmens und dessen Verkleidung, in einer räumlichen Ansicht gezeigt, schräg von vorne gesehen,
- Figur 7: eine Seitenansicht des Sitzkissen-Rahmens,
- Figur 8: eine Draufsicht des in Figur 7 gezeigten Sitzkissen-Rahmens,
- Figur 9: eine Rückansicht des in den Figuren 7 und 8 gezeigten Sitzkissen-Rahmens,
- Figur 10: eine räumliche Darstellung der Lagerung des Fußes in der Schiene,
- Figur 11: einen Schnitt durch den Boden des Fahrzeug-Innenraums, mit den dem Fahrersitz und dem Beifahrersitz zugeordneten Schienen und montiertem Fahrersitz, von hinten gesehen und
- Figur 12: eine Detailansicht der Lagerung des Sitzes in der Schiene, in Schienenlängsrichtung gesehen.

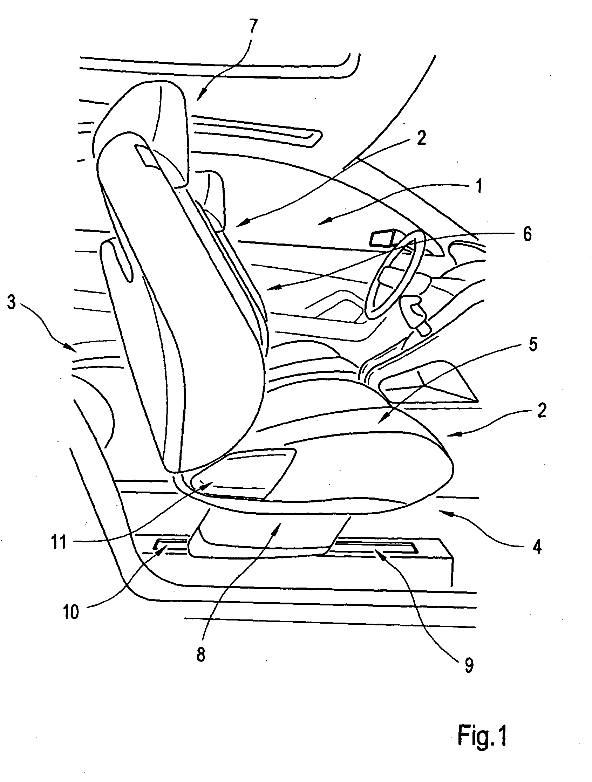

Figur 1 zeigt die erste Sitzreihe in einem Personenkraftwagen. Veranschaulicht sind im Fahrzeug-Innenraum 1 insbesondere die Sitze 2 für Fahrer und Beifahrer sowie die Mittelkonsole 3. Der Boden 4 des Fahrzeuges ist eben ausgebildet. Der jeweilige Sitz 2 weist ein Sitzkissen 5 und eine Rückenlehne 6 auf, die im Bereich ihres oberen Endes eine Kopfstütze 7 aufnimmt. Der Sitz 2 wird nur über einen mittig angeordneten Fuß 8 getragen und geführt. Zur Lagerung des Fußes 8 ist in den Boden 4 eine in dieser Figur nicht gezeigte Schiene eingelassen, die sich somit in Längsrichtung des Fahrzeugs erstreckt. Die im Boden 4 im Bereich der Schiene gebildete Vertiefung ist mittels eines vorderen Rollos 9 und eines hinteren Rollos 10 abgedeckt. Im Bereich der Außenseite des Sitzkissens 5 weist der Sitz 2 Bedienelemente 11 zum Verstellen des Sitzes 2 bzw. der Position der Rückenlehne 6 und des Sitzkissens 5 zueinander auf.

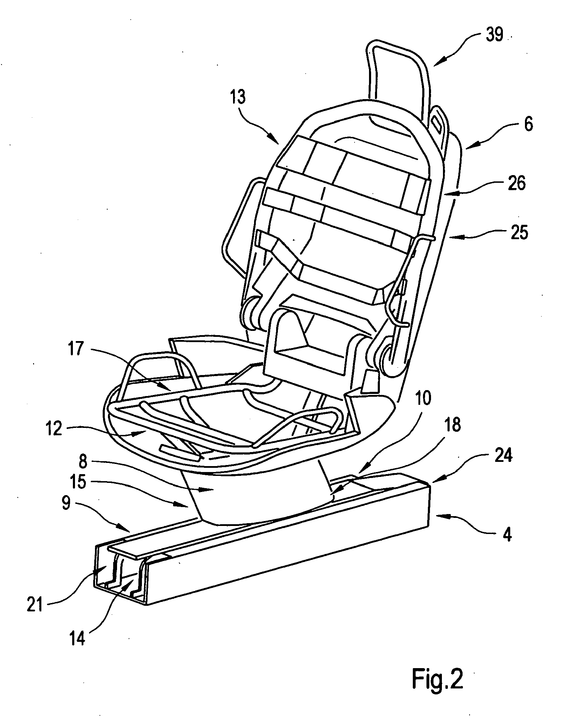

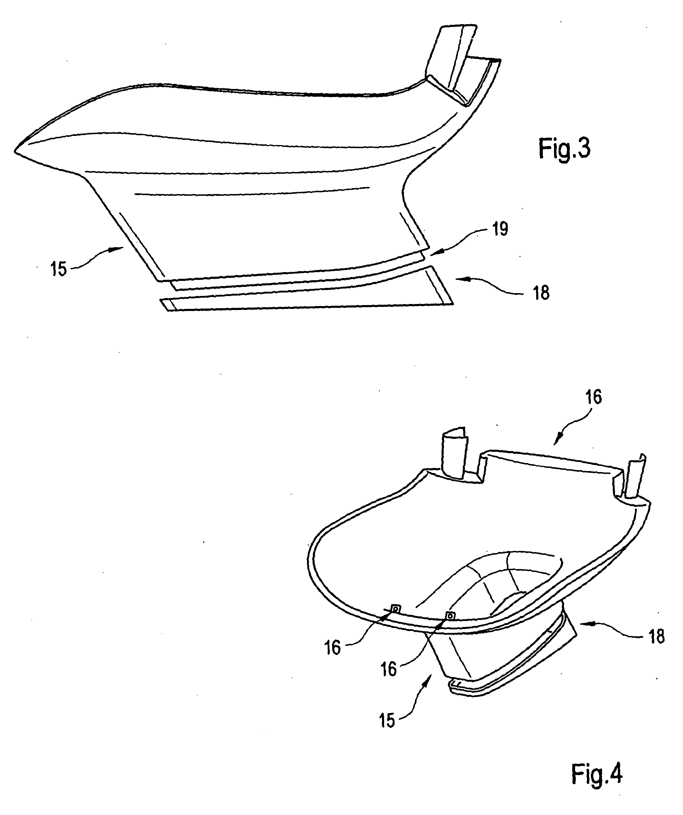

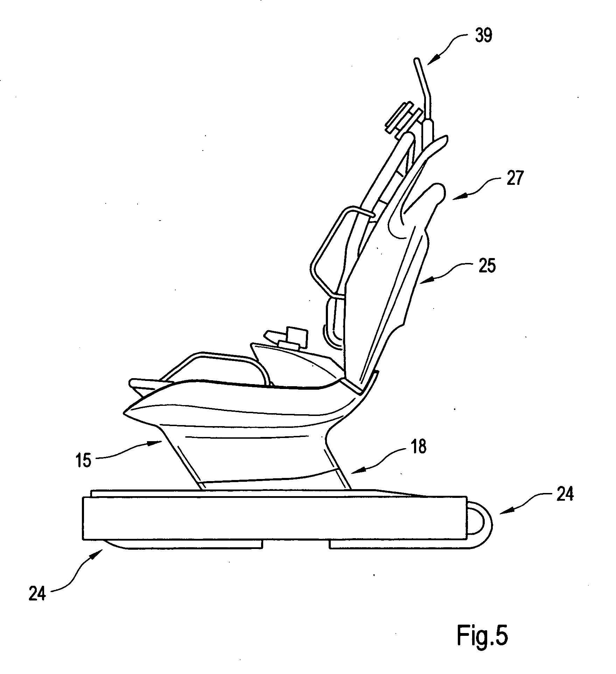

Nach dieser grundsätzlichen Erläuterung des Aufbaus und der Anordnung des Sitzes 2 wird in der nachfolgenden Beschreibung auf die Details gemäß Darstellung der Figuren 2 bis 12 Bezug genommen:

Der Sitz 2 weist einen Sitzkissen-Rahmen 12 und einen Rückenlehnen-Rahmen 13 auf. Diese Rahmen sind im Wesentlichen als Rohrrahmen ausgebildet. Der Rückenlehnen-Rahmen 13 ist gelenkig am Sitzkissen-Rahmen 12 befestigt und es ist der Rückenlehnen-Rahmen 13 relativ zum Sitzkissen-Rahmen 12 schwenkbar. In Folge dessen ist die Rückenlehne 6 drehbar/neigungsverstellbar zum Sitzkissen 5.

Der Fuß 8 des Sitzes 2 ist einerseits mit dem Sitzkissen-Rahmen 12 verbunden und andererseits in der unterhalb des Bodens 4 des Fahrzeuges angeordneten Schiene 14 verfahrbar.

Der Fuß 8 sowie auch der untere Bereich des Sitzkissens 5 sind von einer Carbon-Verkleidung 15 umgeben, die im Querschnitt trichterförmig ausgebildet ist. An der Carbon-Verkleidung 15 sind im Bereich des dem Sitzkissen 5 zugewandten umlaufenden Randes mehrere Flansche 16 zur Befestigung am Rohrrahmenabschnitt 17 des Sitzkissen-Rahmens 12 vorgesehen. Die Carbon-Verkleidung 15 dient der zusätzlichen Versteifung des Sitzkissen-Rahmens 12. Im unteren Bereich der Carbon-Verkleidung 15 ist eine Blende 18 vorhanden, die als Design-Element und als Abschluss der Carbon-Verkleidung 15 dient.

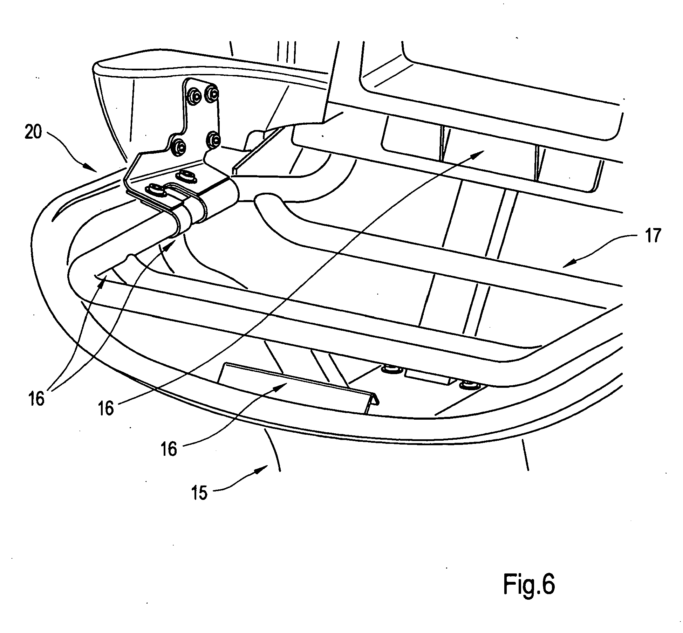

Die als Schale ausgebildete Carbon-Verkleidung 15 und die Blende 18 werden miteinander über einen Stufenflansch 19 durch Kleben oder eine Presspassung verbunden. Im oberen Bereich der Carbon-Verkleidung 15 ist ein bereichsweise (vorn und an den Seiten) umlaufender Flansch 20 zur Befestigung des Sitzkissens 5 (Sitzkissen-Polsters) ausgebildet. Im Schnitt ist dieser Z-förmig gestaltet, damit ein Keder des Sitzkissens 5 bei der Montage eine nach innen gerichtete Kante des Flansches hintergreifen kann (Figur 6).

Der Boden 4 ist U-förmig in Längsrichtung verprägt, sodass sich dort eine Vertiefung 21 ergibt. In der Verprägung/Vertiefung 21 ist ein Verstellmechanismus für den Sitz 2 untergebracht. Die schlitzförmige obere Öffnung 23 der Vertiefung 21 wird beidseitig des Fußes durch das vordere Rollo 9 bzw. das hintere Rolle 10 abgedeckt. Diese Rollos sind in Führungsschienen 24 bogenförmig (180°) geführt.

Die Rückenlehne wird elektrisch in ihrer Neigung mittels eines nicht dargestellten Riementriebs verstellt. An der Carbon-Verkleidung 15 sind zur Verdeckung des Riementriebs Schutzabdeckungen angeformt.

Auf der Rückseite der Rückenlehne 6 ist auch eine Carbon-Verkleidung 25 am Rohrrahmenabschnitt 26 des Rückenlehnen-Rahmens 13 mittels Flanschbefestigung angebracht. In diese Carbon-Verkleidung 25 ist ein Haltegriff 27 für Fondinsassen mit integriert. Mit der Bezugsziffer 39 ist eine Kopfstützen-Halterung bezeichnet.

Die Carbon-Verkleidungen 15 und 25 tragen zur Erhöhung der Steifigkeit und zur Reduzierung des Gewichts bei.

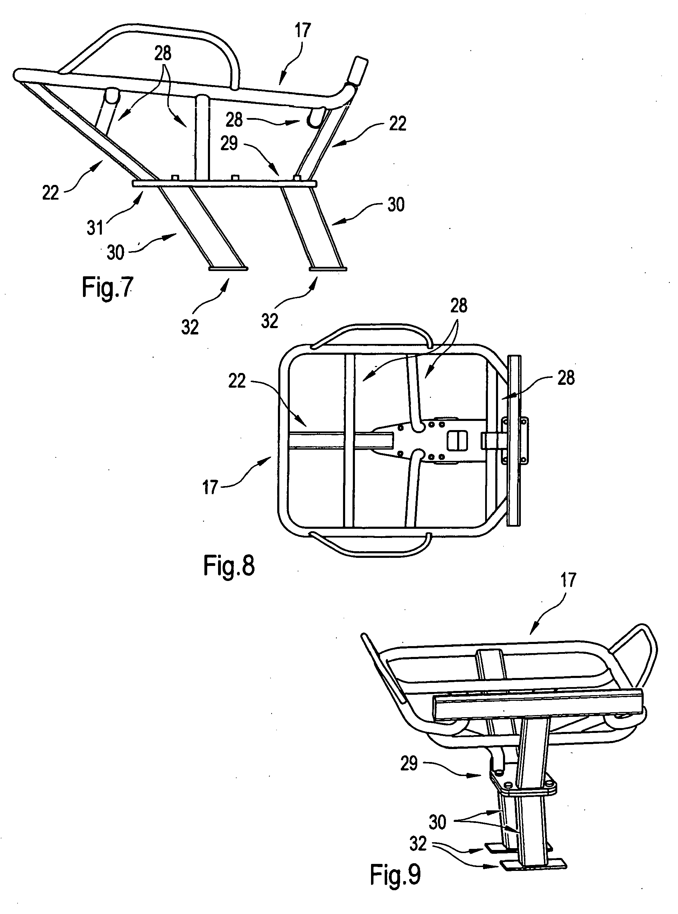

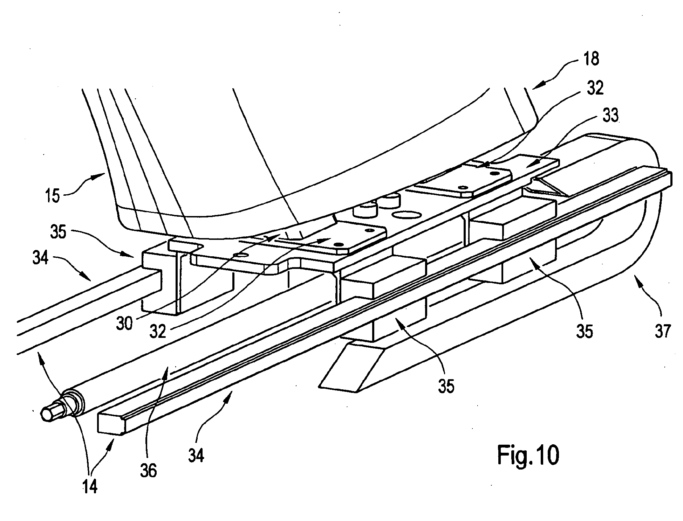

Der Sitzkissen-Rahmen 12 ist zur Aufnahme des Sitzkissens 5 (Sitzkissen-Polsters) ausgebildet. Er weist den Rohrrahmenabschnitt 17, der als umlaufendes Rohr ausgebildet ist, auf, an dem Querverstrebungen 28 und Längsverstrebungen 22 durch Schweißen angebracht sind. Im unteren Bereich sind die Verstrebungen 22 und 28 mit einer etwa bodenparallelen Anschlussplatte 29 verbunden, mit der gleichzeitig zwei im Wesentlichen parallel zueinander angeordnete Tragstützen 30 des Sitzes 2 lösbar befestigt sind. Diese beiden Tragstützen 30 bilden den Fuß 8. Die Tragstützen 30 weisen zur Befestigung des Sitzes 2 eine Anschlussplatte 31 auf, die konturmäßig der Anschlussplatte 29 der Querverstrebungen 28 entspricht und mit dieser durch Schrauben verbunden ist (Figuren 7 bis 9). Die Tragstützen 30 weisen einen Verbindungsflansch 32 auf, der mit dem Schlitten 33 der Führungsschiene 14 zum Lagern des Sitzes 2 verbunden ist. Die Führungsschiene 14 weist zwei parallele Schienenabschnitte 34 auf, die den Schlitten 33 führen (Figur 10).

Der Aufbau zwischen dem Fuß 8 und der Führungsschiene 14 stellt sich wie folgt dar: Der Verbindungsflansch 32 ist durch Schrauben mit dem Schlitten 33 verbunden. Am Schlitten 33 sind beidseitig der Führungsschiene 14 Gleitschuhe 35 angebracht. Diese Umgreifen die Schienenabschnitte 34 der Führungsschiene 14. Mittels eines elektrisch betriebenen Spindelantriebs 36 wird der Sitz 2 in Längsrichtung verstellt. In der Vertiefung 21 ist noch ein Kabelkanal 37 für die elektrischen Verbindungen und Steuerungen des Sitzes 2 vorgesehen. Im Boden 4 sind die beiden parallel zueinander angeordneten Vertiefungen 21 zur Aufnahme von Fahrersitz und Beifahrersitz sowie der dahinter befindlichen Sitze vorgesehen, ferner ist zwischen diesen eine Schiene 38 zur verschiebbaren Aufnahme der Mittelkonsole 3 angeordnet.

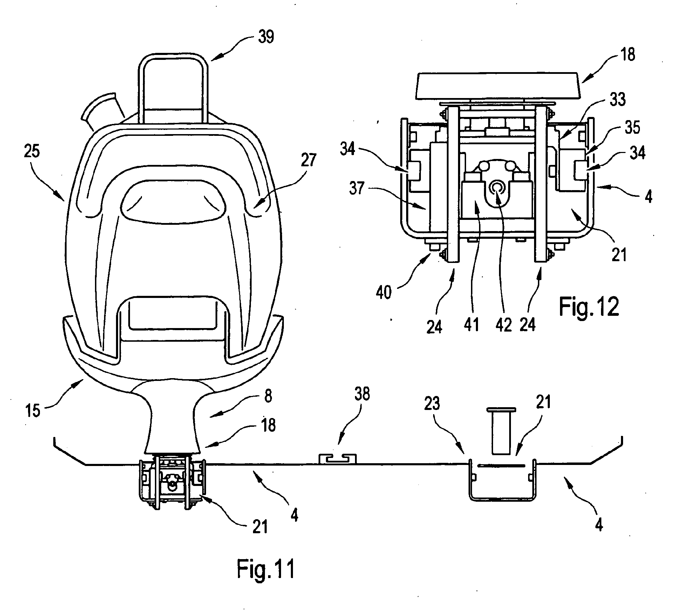

Mit der Bezugsziffer 40 ist die Befestigung der Führungsschiene 14 am Boden 4 mit der Bezugsziffer 41 die Lagerung für die Spindel 42 des Spindelantriebs 36 bezeichnet (Figur 12).

Die Führungsschienen 24 für die Rollos 9 und 10 sind einerseits unter dem Boden 4 mit dem Boden 4 verbunden und dem oberen Bereich, somit der Öffnung 23 über eine Distanzhalterung 43 miteinander verbunden. Die Führungsschiene 14 ist mit dem Boden 4 im Bereich der Vertiefung 21 verbunden, beispielsweise durch Schrauben oder Nieten.

### Bezugszeichenliste

- Fahrzeug-Innenraum: 1
- Sitz: 2
- Mittelkonsole: 3
- Boden: 4
- Sitzkissen: 5
- Rückenlehne: 6
- Kopfstütze: 7
- Fuß: 8
- vorderes Rollo: 9
- hinteres Rollo: 10
- Bedienelement: 11
- Sitzkissen-Rahmen: 12
- Rückenlehnen-Rahmen: 13
- Schiene: 14
- Carbon-Verkleidung: 15
- Flansch: 16
- Rohrrahmenabschnitt: 17
- Blende: 18
- Stufenflansch: 19
- Flansch: 20
- Vertiefung: 21
- Längsverstrebungen: 22
- Öffnung: 23
- Führungsschiene: 24
- Carbon-Verkleidung: 25
- Rohrrahmenabschnitt: 26
- Haltegriff: 27
- Querverstrebung: 28
- Anschlussplatte: 29
- Tragstütze: 30
- Anschlussplatte: 31
- Verbindungsflansch: 32
- Schlitten: 33
- Schienenabschnitt: 34
- Gleitschuh: 35
- Spindelantrieb: 36
- Kabelkanal: 37
- Schiene: 38
- Kopfstützen-Halterung: 39
- Befestigung: 40
- Lagerung: 41
- Spindel: 42

## Patentansprüche

1. Kraftfahrzeug mit einem Sitz (2), insbesondere Personenkraftwagen mit einem Vordersitz, wobei der Sitz (2) in einer Schiene (14) gelagert ist und einen Sitzkissen-Rahmen (12) zur Aufnahme eines Sitzkissens (5) und einen Rückenlehnen-Rahmen (13) zur Aufnahme einer Rückenlehne (6) aufweist, sowie der Rückenlehnen-Rahmen (13) im Sitzkissen-Rahmen (12) gelagert ist, sowie der Sitz (2) einen durch mindestens eine Tragstütze (30) gebildeten Fuß (8) aufweist, der einerseits mit dem Sitzkissen-Rahmen (12) verbunden ist und andererseits in der unterhalb des Bodens (4) des Fahrzeug-Innenraums (1) angeordneten Schiene (14) gelagert ist, sowie die Lagerung des Sitzes (2) nur über den Fuß (8) erfolgt, **dadurch gekennzeichnet, dass** eine Vertiefung (21) die Schiene (14) aufnimmt, der Fuß (8) mit einer Verkleidung (15) versehen ist sowie Mittel (9, 10) zum Abdecken der Vertiefung (21) in demjenigen Bereich, der vom Fuß (8) nicht eingenommen wird, vorgesehen sind.

2. Fahrzeug nach Anspruch 1, **dadurch gekennzeichnet, dass** der Sitzkissen-Rahmen (12) Rohrabschnitte (17) aufweist.

3. Fahrzeug nach Anspruch 1 oder 2, **dadurch gekennzeichnet, dass** der Rückenlehnen-Rahmen (13) Rohrabschnitte (26) aufweist.

4. Fahrzeug nach einem der Ansprüche 1 bis 3, **dadurch gekennzeichnet, dass** der Sitzkissen-Rahmen (12) mittig im Fuß (8) gelagert ist.

5. Fahrzeug nach einem der Ansprüche 1 bis 4, **dadurch gekennzeichnet, dass** der Fuß (8) durch zwei Tragstützen (30) gebildet ist, die im Wesentlichen parallel zueinander angeordnet sind.

6. Fahrzeug nach einem der Ansprüche 1 bis 5, **dadurch gekennzeichnet, dass** der Fuß (8) und der untere Bereich des Sitzkissens (5) mit einer gemeinsamen Verkleidung (15) versehen sind.

7. Fahrzeug nach einem der Ansprüche 1 bis 6, **dadurch gekennzeichnet, dass** die Verkleidung (15) mit dem Sitzkissen-Rahmen (12) verbunden ist.

8. Fahrzeug nach einem der Ansprüche 1 bis 7, **dadurch gekennzeichnet, dass** die Verkleidung (15) aus Carbon besteht.

9. Fahrzeug nach einem der Ansprüche 1 bis 8, **dadurch gekennzeichnet, dass** die Verkleidung (15) im oberen Bereich einen bereichsweise umlaufenden Flansch (16) zur Befestigung des Sitzkissens (5) aufweist.

10. Fahrzeug nach einem der Ansprüche 1 bis 9, **dadurch gekennzeichnet, dass** an der Rückseite der Rückenlehne (6) eine Verkleidung (25) befestigt ist, insbesondere eine aus Carbon bestehende Verkleidung (25).

11. Fahrzeug nach Anspruch 10, **dadurch gekennzeichnet, dass** die Verkleidung (25) am Rückenlehnen-Rahmen (13) befestigt ist.

12. Fahrzeug nach Anspruch 10 oder 11, **dadurch gekennzeichnet, dass** in die Verkleidung (25) der Rückenlehne (6) ein Haltegriff (27) für den hinter dem Sitz (2) platzierten Fahrzeuginsassen integriert ist.

13. Fahrzeug nach einem der Ansprüche 1 bis 12, **dadurch gekennzeichnet, dass** der Boden (4) des Fahrzeug-Innenraums (1) U-förmig vertieft ausgebildet, insbesondere U-förmig verprägt ist, wobei die Vertiefung (21) die Schiene (14) und einen Verstellmechanismus (22) für den Sitz (2) aufnimmt.

14. Fahrzeug nach einem der Ansprüche 1 bis 13, **dadurch gekennzeichnet, dass** die Mittel (9, 10) verschiebbar sind

15. Fahrzeug nach Anspruch 14, **dadurch gekennzeichnet, dass** die Mittel (9, 10) zum Abdecken der Vertiefung (21) als Rollos (9, 10) ausgebildet sind, die, in Verschieberichtung des Sitzes (2), vor und hinter diesem angeordnet sind.

16. Fahrzeug nach Anspruch 14 oder 15, **dadurch gekennzeichnet, dass** die Mittel (9, 10) zum Abdecken der Vertiefung (21) in Lagerschienen (24) gelagert sind, die innerhalb der Vertiefung (21) angeordnet sind.

17. Fahrzeug nach einem der Ansprüche 1 bis 16, **dadurch gekennzeichnet, dass** ein elektrischer Antrieb zur Verstellung der Neigung der Rückenlehne (6) vorgesehen ist.

18. Fahrzeug nach einem der Ansprüche 1 bis 17, **dadurch gekennzeichnet, dass** der Sitzkissen-Rahmen einen als umlaufendes Rohr ausgebildeten Rohrrahmenabschnitt (17) zur Aufnahme des Sitzkissens (5), am Rohr angebrachte Verstrebungen (22, 28) und eine diese aufnehmende bodenparallele Anschlussplatte (29) aufweist.

19. Fahrzeug nach Anspruch 18, **dadurch gekennzeichnet, dass** an der Anschlussplatte (29) die mindestens eine Tragstütze (30) lösbar befestigt ist.

20. Fahrzeug nach einem der Ansprüche 1 bis 19, **dadurch gekennzeichnet, dass** die mindestens eine Tragstütze (30) mit einem Schlitten (33) der Führungsschiene (14) verbunden ist, insbesondere lösbar verbunden ist.

21. Fahrzeug nach einem der Ansprüche 1 bis 20, **dadurch gekennzeichnet, dass** der Sitz (2) mittels eines elektrischen Spindelantriebs (36) verfahrbar ist.

22. Fahrzeug nach einem der Ansprüche 1 bis 21, **dadurch gekennzeichnet, dass** der Sitz (2) in der Schiene (14) verfahrbar gelagert ist.

23. Fahrzeug nach einem der Ansprüche 1 bis 22, **dadurch gekennzeichnet, dass** der Rückenlehnen-Rahmen (13) schwenkbar im Sitzkissen-Rahmen (12) gelagert ist.

24. Fahrzeug nach einem der Ansprüche 1 bis 23, **dadurch gekennzeichnet, dass** der Fuß (8) durch zwei Tragstützen (30) gebildet ist, die, bezogen auf die Verschieberichtung des Sitzes, hintereinander angeordnet sind.

## Claims

1. Motor vehicle with a seat, in particular a passenger car with a front seat wherein the seat (2) is mounted in a rail (14) and comprises a seat cushion frame (12) for placing a seat cushion (5) and a backrest frame (13) for placing a backrest (6); the backrest frame (13) is also mounted in the seat cushion frame (12) and the seat (2) comprises a pedestal (8) with at least one support (30) which is connected, on the hand, to the seat cushion frame (12) and on the other hand is mounted in the rail which is arranged underneath the floor (4) of the motor vehicle interior; the positioning of the seat (2) can only be achieved through use of the pedestal (8), **characterised in that** the pedestal (8) is provided with a casing (15) as well as means (9, 10) for covering up the indentation (21) in the particular area which is not covered by the pedestal (8).

2. Motor vehicle according to claim 1, **characterised in that** the seat cushion frame (12) comprises pipe sections (17).

3. Motor vehicle according to claim 1 or 2, **characterised in that** the backrest frame (13) comprises pipe sections (26).

4. Motor vehicle according to one of the claims 1 through 3, **characterised in that** the seat cushion frame (12) is positioned in the middle of the pedestal.

5. Motor vehicle according to one of the claims 1 through 4, **characterised in that** the pedestal (8) is formed by two support braces (30) which are essentially arranged parallel to one another.

6. Motor vehicle according to one of the claims 1 through 5, **characterised in that** the pedestal (8) and the lower area of the seat cushion (5) are provided with a mutual casing (15).

7. Motor vehicle according to one of the claims 1 through 6, **characterised in that** the casing (15) is connected to the seat cushion frame (12).

8. Motor vehicle according to one of the claims 1 through 7, **characterised in that** the casing (15) is made up of carbon.

9. Motor vehicle according to one of the claims 1 through 8, **characterised in that** the casing (15) comprises a circumferential flange in the upper area for fastening the seat cushion (5).

10. Motor vehicle according to one of the claims 1 through 9, **characterised in that** a casing (25) is fastened to the back side of the backrest (6), particularly a casing (25) made from carbon.

11. Motor vehicle according to claim 10, **characterised in that** the casing (25) is fastened to the backrest frame (13).

12. Motor vehicle according to claim 10 or 11, **characterised in that** the casing (25) of the backrest (6), a grab handle (27) is integrated for the passengers sitting behind the front seat (2).

13. Motor vehicle according to one of the claims 1 through 12, **characterised in that** the floor (4) of the motor vehicle interior (1) is formed with a U-shaped indentation, wherein this indentation (21) takes in the rail (14) and an adjustment mechanism (22) for the seat (2).

14. Motor vehicle according to one of the claims 1 through 13, **characterised in that** the means (9,10) are adjustable.

15. Motor vehicle according to claim 14, **characterised in that** the means (9, 10) for covering up the indentation (21) are configured as roller blinds (9, 10), which are arranged in front and in back of the movement direction of the seat (2).

16. Motor vehicle according to claim 14 or 15, **characterised in that** the means (9,10) for covering up the indentation (21) are mounted in mounting rails (24) which are arranged within the indentation (21).

17. Motor vehicle according to one of the claims 1 through 16, **characterised in that** the electrical actuation is provided for adjusting the inclination of the backrest (6).

18. Motor vehicle according one of the claims 1 through 17, **characterised in that** the seat cushion frame comprises a pipe frame section (17), configured as circumferential pipe, for placing the seat cushion (5); the pipe has affixed struttings (22, 28) and a connecting plate.

19. Motor vehicle according to claim 18, **characterised in that** at least one detachable support brace (30) is fastened on the connection plate.

20. Motor vehicle according to one of the claims 1 through 19, **characterised in that** the at least one support brace (30) is connected with a slide (33) from the leading rail (14), in particular it is detachable.

21. Motor vehicle according to one of the claims 1 through 20, **characterised in that** the seat (2) is adjustable by means of an electrical screw driven lift (36).

22. Motor vehicle according one of the claims 1 through 21, **characterised in that** the seat (2) is adjustably mounted in the rail (14).

23. Motor vehicle according to one of the claims 1 through 22, **characterised in that** the backrest frame (13) is swivel-mounted in the seat cushion frame (12).

24. Motor vehicle according to one of the claims 1 through 23, **characterised in that** the pedestal (8) is formed through two support braces (30), which are arranged one in front of the other corresponding to the movement direction of the seat.

## Revendications

1. Véhicule automobile comportant un siège (2), en particulier un véhicule léger comportant un siège avant, étant donné que le siège (2) est monté sur un rail (14) et présente un cadre de coussin de siège (12) pour l'accueil d'un coussin de siège (5), et un cadre de dossier de siège (13) pour l'accueil d'un dossier (6), et que le cadre de dossier de siège (13) repose dans le cadre de coussin de siège (12), et que le siège (2) présente un pied (8) qui est formé par au moins un support d'appui (30) et est attaché d'une part avec le cadre de coussin de siège (12) et d'autre part, il repose sur le rail (14) qui se trouve au dessous du fond (4) de l'intérieur (1) du véhicule automobile, et que le support du siège (2) ne s'effectue qu'au moyen du pied (8), **caractérisé en ce que** une enfonçure (21) incorpore le rail (14), **en ce que** le pied est muni d'un habillage (15) et que des moyens (9,10) sont prévus pour couvrir l'enfonçure (21) au niveau de la zone qui n'est pas occupée par le pied (8).

2. Véhicule automobile selon revendication 1, **caractérisé en ce que** le cadre de coussin de siège (12) présente des sections tubulaires (17).

3. Véhicule automobile selon revendication 1 ou 2, **caractérisé en ce que** le cadre de dossier de siège (13) présente des sections tubulaires (26).

4. Véhicule automobile selon l'une des revendications 1 à 3, **caractérisé en ce que** le cadre de coussin de siège (12) est monté au centre du pied (8).

5. Véhicule automobile selon l'une des revendications 1 à 4, **caractérisé en ce que** le pied (8) est constitué de deux supports d'appui (30) qui sont disposés pour l'essentiel parallèle l'un à l'autre.

6. Véhicule automobile selon l'une des revendications 1 à 5, **caractérisé en ce que** le pied (8) et la zone inferieur du coussin de siège (5) sont munis d'un habillage (15) commun.

7. Véhicule automobile selon l'une des revendications 1 à 6, **caractérisé en ce que** l'habillage (15) est fixé au cadre de coussin de siège (12).

8. Véhicule automobile selon l'une des revendications 1 à 7, **caractérisé en ce que** l'habillage (15) est constituée en carbone.

9. Véhicule automobile selon l'une des revendications 1 à 8, **caractérisé en ce que** l'habillage (15) présente dans la zone supérieure, un bride (18) rotatif en certaines parties pour la fixation du coussin de siège (5).

10. Véhicule automobile selon l'une des revendications 1 à 9, **caractérisé en ce que** un habillage (25) est fixé à la face arrière du dossier (6), en particulier un habillage (25) constitué en carbone.

11. Véhicule automobile selon revendication 10, **caractérisé en ce que** l'habillage (25) est fixé au cadre de dossier de siège (13).

12. Véhicule automobile selon revendication 10 ou 11, **caractérisé en ce que** une poignée (27), pour le passager de véhicule prenant place derrière le siège (2), est intégrée dans l'habillage (25) du dossier (6).

13. Véhicule automobile selon l'une des revendications 1 à 12, **caractérisé en ce que** le fond (4) de l'intérieur du véhicule (1) est réalisé approfondi, en forme de U, en particulier estampé en forme de U, étant donné que le rail (14) et un mécanisme de réglage (22) pour le siège (2) logent au sein de l'enfonçure (21).

14. Véhicule automobile selon l'une des revendications 1 à 13, **caractérisé en ce que** les moyens (9, 10) sont mobiles.

15. Véhicule automobile selon revendication 14, **caractérisé en ce que** les moyens (9, 10), pour recouvrir l'enfonçure (21), sont réalisés sous forme de volets roulants (9, 10) qui, dans le sens de coulissement du siège (2), sont disposés devant et derrière ce dernier.

16. Véhicule automobile selon revendication 14 ou 15, **caractérisé en ce que** les moyens (9, 10), pour recouvrir l'enfonçure (21), sont logés dans des bars (24) qui sont disposés dans l'enfonçure (21).

17. Véhicule automobile selon l'une des revendications 1 à 16, **caractérisé en ce que** un organe d'entraînement électrique destiné pour un réglage de l'inclinaison du dossier (6) est prévu.

18. Véhicule automobile selon l'une des revendications 1 à 17, **caractérisé en ce que** le cadre de coussin de siège présente une section de cadre tubulaire (17) réalisée sous forme d'un tube rotatif, pour l'accueil du coussin de siège (5), des contre-fiches (22, 28) disposées au niveau du tube et une plaque de connexion (29) parallèle au fond qui incorpore ces dernières.

19. Véhicule automobile selon revendication 18, **caractérisé en ce que** au moins l'un des support d'appui (30) est fixé de manière détachable à la plaque de connexion (29).

20. Véhicule automobile selon l'une des revendications 1 à 19, **caractérisé en ce que** au moins l'un des support d'appui (30) est fixé à un chariot (33) du rail de guidage (14), en particulier fixé de manière détachable.

21. Véhicule automobile selon l'une des revendications 1 à 20, **caractérisé en ce que** le siège (2) est capable d'être déplacé au moyen d'un entrainement à broche (36) électrique.

22. Véhicule automobile selon l'une des revendications 1 à 21, **caractérisé en ce que** le siège (2) est monté sur le rail (14) de manière à pouvoir être déplacé.

23. Véhicule automobile selon l'une des revendications 1 à 22, **caractérisé en ce que** le cadre de dossier de siège (13) est logé de manière pivotante, au sein du cadre de coussin de siège (12).

24. Véhicule automobile selon l'une des revendications 1 à 23, **caractérisé en ce que** le pied (8) est formé de deux supports d'appui (30), qui sont rangés l'un après l'autre, par rapport au sens de déplacement du siège.
